# EUROPEAN PATENT APPLICATION

(11) **EP 4 678 463 A1**
(43) Date of publication of application: **14.01.2026**
(21) Application number: 24767398.1
(22) Date of filing: 06.03.2024
(51) Int. Cl.: B60L 53/30, B60L 53/66

(54) **VEHICLE-TO-VEHICLE ELECTRIC VEHICLE CHARGING METHOD AND DEVICE**

(30) Priority: 06.03.2023 KR 20230029457
(71) Applicant: Hyundai Motor Company, Seoul 06797 (KR); Kia Corporation, Seoul 06797 (KR); Myongji University Industry and Academia Cooperation Foundation, Gyeonggi-do 54538 (KR)
(72) Inventor: CHOI, Jae Hyuk, Hwaseong-si, Gyeonggi-do 18280 (KR); SEONG, Jae Yong, Hwaseong-si, Gyeonggi-do 18280 (KR); SHIN, Min Ho, Yongin-si, Gyeonggi-do 17058 (KR)
(74) Representative: Isarpatent
(86) International application number: PCT/KR2024/002843
(87) International publication number: WO 2024/186110

(57) **Abstract**

A charging method according to the present invention comprises the steps of: establishing a communication link with a mobile power supply device; performing at least one of mutual identification, authentication, or authorization between the mobile power supply device and an electric mobility means; starting a charging process for receiving power from the mobile power supply device; and terminating the charging process.

## Description

### [Technical Field]

The present disclosure relates to a power transmission method and apparatus for an electric vehicle (EV) or electric mobility, and more particularly, to a method of supplying power from a mobile power supply device or an electric mobility to another electric mobility, and a power supply device, a communication protocol, and a communication device for implementing the same.

### [Background Art]

The content described in this section is provided solely for background information on the exemplary embodiment and does not constitute prior art.

Recently developed electric vehicles (EVs), which drive a motor using power from a battery, have advantages over conventional gasoline engine vehicles in that electric vehicles emit fewer air pollutants such as exhaust gases and noise, are less prone to breakdowns, have a longer lifespan, and offer simpler driving operations.

Electric vehicles are classified according to the type of driving source into hybrid electric vehicles (HEVs), plug-in hybrid electric vehicles (PHEVs), and electric vehicles (EVs). HEVs have an engine as a primary power source and a motor as an auxiliary power source. PHEVs have a motor as a primary power source and an engine used when the battery is discharged. EVs have a motor but do not have an engine.

An electric vehicle charging system may be basically defined as a system that charges a battery mounted in the electric vehicle using power from a commercial power distribution grid or an energy storage device. Such electric vehicle charging systems may take various forms depending on the type of electric vehicle. For example, the electric vehicle charging system may include a conductive charging system using cables or a contactless wireless power transfer system.

When an electric vehicle is charged, a vehicle assembly (VA) mounted in the electric vehicle forms an inductive resonant coupling with a transmission pad of a ground assembly (GA) located at a charge station or charging spots, and charges the battery of the electric vehicle using power delivered from the ground assembly through the inductive resonant coupling.

In the prior art, a method for supplying power under conditions where it is difficult for the electric vehicle to easily find or reach a charging station has not been implemented.

### [Disclosure]

### [Technical Problem]

To solve the above-mentioned problem, an objective of the present disclosure is to provide a method of supplying power from a mobile power supply device or an electric mobility to another electric mobility, and a communication protocol and charging process for implementing the same.

Another objective of the present disclosure is to provide various use cases for implementing a method of supplying power from a mobile power supply device or an electric mobility to another electric mobility.

Another objective of the present disclosure is to provide a power supply device, supporting infrastructure, a communication protocol, and a communication device for implementing a method of supplying power from a mobile power supply device or an electric mobility to another electric mobility.

Another objective of the present disclosure is to provide message types, data formats, and message contents including information required among a user communication device (terminal), secondary actors, a mobile power supply device, and/or an electric mobility in the process.

### [Technical Solution]

According to an aspect of an exemplary embodiment, a charging method is performed in an electric mobility that receives power from a mobile power supply device. The charging method may include performing communication connection with the mobile power supply device, performing one or more of mutual identification, authentication, or authorization between the mobile power supply device and the electric mobility, starting a charging process for receiving power from the mobile power supply device, and terminating the charging process.

The charging method in accordance with an exemplary embodiment may further include sharing a safe charging condition of the mobile power supply device and the electric mobility with the mobile power supply device before starting the charging process, and monitoring a charging-related parameter of the mobile power supply device or the electric mobility during the charging process after starting the charging process.

The charging method in accordance with an exemplary embodiment may further include identifying which use case the charging process belongs to among one or more use cases, in order to determine whether to impose a fee for the power supplied to the electric mobility through the charging process. The at least one use case may include useful free charging in an emergency situation, mobile charging service, or peer-to-peer trading of charging amounts.

The performing of the communication connection with the mobile power supply device may include searching for a candidate mobile power supply device capable of supplying power to the electric mobility, by the electric mobility, and receiving a response to the search from the mobile power supply device.

The searching for the candidate mobile power supply device may include broadcasting a message requesting charging by the electric mobility.

The message requesting charging may include a location of the electric mobility (e.g., customer EV location), an energy request [Wh], a charging start time, a target departure time, or a charging specification. The charging specification may include a maximum power limit, a maximum current limit, or a maximum voltage limit.

According to an aspect of an exemplary embodiment, a communication and control device for charging of an electric mobility is mounted in the electric mobility and configured to perform communication and control related to charging. The communication and control device may include a memory storing at least one instruction, and a processor executing the at least one instruction. The processor may, by the at least one instruction, perform communication connection with a mobile power supply device, perform one or more of mutual identification, authentication, or authorization between the mobile power supply device and the electric mobility, start a charging process for receiving power from the mobile power supply device, and terminate the charging process.

The processor may, by the at least one instruction, share a safe charging condition of the mobile power supply device and the electric mobility with the mobile power supply device before starting the charging process, and monitor a charging-related parameter of the mobile power supply device or the electric mobility during the charging process after starting the charging process.

In the performing of the communication connection with the mobile power supply device, the processor may search for a candidate mobile power supply device capable of supplying power to the electric mobility, and receive a response to the search from the mobile power supply device.

In the electric mobility searching for the candidate mobile power supply device, the processor may broadcast a message requesting charging.

The message requesting charging may include a location of the electric mobility, an energy request, a charging start time, a target departure time, or a charging specification. The charging specification may include a maximum power limit, a maximum current limit, or a maximum voltage limit.

According to an aspect of an exemplary embodiment, a communication and control device of a mobile power supply device, includes a memory storing at least one instruction, and a processor executing the at least one instruction. The processor may, by the at least one instruction, perform communication connection with an electric mobility that receives power, perform one or more of mutual identification, authentication, or authorization between the mobile power supply device and the electric mobility, start a charging process for supplying power to the electric mobility, and terminate the charging process.

The processor may, by the at least one instruction, share a safe charging condition of the mobile power supply device and the electric mobility with the electric mobility before starting the charging process, and monitor a charging-related parameter of the mobile power supply device or the electric mobility during the charging process after starting the charging process.

The processor may, by the at least one instruction, identify which use case the charging process belongs to among one or more use cases, in order to determine whether to impose a fee for the power supplied to the electric mobility through the charging process. The one or more use cases may include useful free charging in an emergency situation, mobile charging service, or peer-to-peer trading of charging amounts.

In the performing of the communication connection with the electric mobility, the processor may receive a request message that is broadcast by the electric mobility to search for a candidate mobile power supply device capable of supplying power to the electric mobility, and transmit a response message to the electric mobility based on the request message.

The response message may include acceptance of the request message, an expected arrival time, an expected service charge, an expected duration of charging, or a charging specification. The charging specification may include a maximum power limit, a maximum current limit, or a maximum voltage limit.

The processor may, by the at least one instruction, guide a driver of the electric mobility or control the electric mobility such that the mobile power supply device moves to a location of the electric mobility before starting the charging process.

The processor may, by the at least one instruction, determine whether to supply power to the electric mobility based on status information of the mobile power supply device before starting the charging process. The status information may include a location (GPS coordinate), a travel direction, a distance limit, travel availability, an amount of energy available for supply/discharge, a current/residual state of charge (SoC), a mobility status, a maximum distance available for supply/discharge, an earliest time to depart for supply/discharge, a price, or a charging specification.

The mobility status may be one of discharging to another mobility, parked, charging, or traveling. The charging specification may include a maximum power limit, a maximum current limit, or a maximum voltage limit.

In the determining whether to supply power to the electric mobility before starting the charging process, wherein the processor may obtain at least part of the status information of the mobile power supply device through communication with at least one secondary actor server, and determine whether to supply power to the electric mobility based on the communication with the at least one secondary actor server.

The processor may, by the at least one instruction, transmit a report message to at least one secondary actor server based on the charging process ending. The report message may include a location of service, a request time, an arrival time, a finished time, or a distance traveled for the service.

### [Advantageous Effects]

According to an exemplary embodiment of the present disclosure, a method of supplying power from a mobile power supply device or an electric mobility to another electric mobility, a communication protocol, and a charging process for implementing the method may be provided.

According to an exemplary embodiment of the present disclosure, a method of supplying power from a mobile power supply device or an electric mobility to another electric mobility and various use cases for implementing the method may be provided.

According to an exemplary embodiment of the present disclosure, a method of supplying power from a mobile power supply device or an electric mobility to another electric mobility, and a power supply device, supporting infrastructure, communication protocol, and communication device for implementing the method may be provided.

According to an exemplary embodiment of the present disclosure, message types, data formats, and message contents including information required between a user terminal, a secondary actor, a mobile power supply device, and/or an electric mobility during the process may be provided.

### [Description of Drawings]

FIG. 1 is a conceptual diagram illustrating a process in which power is supplied from a mobile power supply device to an electric mobility according to an exemplary embodiment of the present disclosure.
FIG. 2 is a conceptual diagram more particularly illustrating a process in which power is supplied from a mobile power supply device to an electric mobility according to another exemplary embodiment of the present disclosure.
FIG. 3 is a conceptual diagram illustrating a protocol of a charging process in which power is supplied from a mobile power supply device to an electric mobility according to an exemplary embodiment of the present disclosure.
FIG. 4 is a conceptual diagram illustrating a protocol of a charging process in which power is supplied from a mobile power supply device to an electric mobility according to another exemplary embodiment of the present disclosure.
FIG. 5 is a conceptual diagram illustrating a protocol of a charging process in which power is supplied from a mobile power supply device to an electric mobility according to another exemplary embodiment of the present disclosure.
FIG. 6 is a conceptual diagram illustrating a protocol of a charging process in which power is supplied from a mobile power supply device to an electric mobility according to another exemplary embodiment of the present disclosure.
FIG. 7 is a conceptual diagram illustrating a protocol of a charging process in which power is supplied from a mobile power supply device to an electric mobility according to another exemplary embodiment of the present disclosure.
FIG. 8 is a conceptual block diagram illustrating an internal structure of a generalized computing system capable of implementing a power supply device, a communication and control device within the power supply device, a communication and control device within an electric mobility, secondary actors, and a user terminal according to an exemplary embodiment of the present disclosure.

### [Best mode of the Invention]

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, conventional technologies known to public before the filing of the present disclosure may be utilized in performing a setup, an association, a pairing, a localization, a positioning, and a docking/undocking control before charging an electric vehicle or in transmitting or receiving information required to perform the processes by applying mobile communication technologies such as Wi-Fi or 5G in a single-layer. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator.

The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Plug-in vehicle (PV)": An electric vehicle rechargeable via wireless charging from an electric vehicle supply equipment (EVSE) without using a physical plug or a physical socket.

"Heavy duty vehicle (H.D. Vehicle)": Any four-or more wheeled vehicle as defined in 49 CFR 523.6 or 49 CFR 37.3 (bus).

"Light duty plug-in electric vehicle": A three or four-wheeled vehicle propelled by an electric motor drawing current from a rechargeable storage battery or other energy devices for use primarily on public streets, roads and highways and rated at less than 4,545 kg gross vehicle weight.

"Wireless power charging system (WCS)": A system for wireless power transfer and control of interactions including operations for an alignment and communications between a supply device (or ground assembly) and an EV device (or vehicle assembly).

"Wireless power transfer (WPT)": A transfer of electric power between a power source such as a utility, the power grid, an energy storage device, a fuel cell generator and the EV through a contactless channel such as electromagnetic induction and resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": A system in which EVSE and/or EV (including the PEV, or PHEV) communicate with power grid to optimize charging ratio or discharging ratio of EV by reflecting capacity of the power grid or expense of use.

"Automatic charging": A procedure in which inductive charging is automatically performed after a vehicle is located in a proper position corresponding to a primary charger assembly which may transfer power by a conductive or inductive charging. The automatic charging may be performed after obtaining necessary authentication and right.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupler": A transformer formed by the primary coil in the primary device or a ground assembly (GA) and the secondary coil in the secondary device or a vehicle assembly (VA) that allows power to be transferred through electric isolation.

"Inductive coupling": A magnetic coupling between two coils. One of the two coils may refer to a primary coil or GA coil, and the other one of the two coils may refer to a secondary coil or vehicle assembly VA coil.

"Supply Power Circuit (SPC)" or "Ground assembly (GA)": An assembly disposed on a primary device or the ground assembly or an infrastructure side including the primary coil (or GA coil) and other components. The other components may include at least one part to control the impedance and resonant frequency, a ferrite enforcing the magnetic path, and electromagnetic shielding materials. For example, the SPC or GA may include a power/frequency conversion unit and a SPC controller (or GA controller) necessary to function as a power source of a wireless power charging system, a wiring from the grid, and wirings between each unit, filtering circuits, and a housing.

"EV power circuit (EVPC)" or "Vehicle assembly (VA)": An assembly mounted in the vehicle including the secondary coil (or VA Coil) and other components. The other components may include at least one part to control the impedance and resonant frequency, a ferrite enforcing the magnetic path, and electromagnetic shielding materials. For example, the EVPC or VA may include a power/frequency conversion unit and a EVPC controller (or VA controller) necessary to as the vehicle part of a wireless power charging system, wiring to the vehicle batteries, and wirings between each unit, filtering circuits, and a housing.

The SPC may be referred to as or identified by the ground assembly (GA) or the like. Similarly, the EVPC may be referred to as or identified by the vehicle assembly (VA) or the like.

The GA may be referred to as the primary device, or the like, and the VA may be referred to as the EV device, the secondary device, or the like.

The GA may be referred to as the supply device, a power supply side device, or the like, and the VA may be referred to as the EV device, an EV side device, or the like.

"Primary device": An apparatus providing the contactless coupling to the secondary device. In other words, the primary device may be an apparatus external to an EV. When the EV is receiving power, the primary device may operate as the source of the power to be transferred. The primary device may include the housing and all covers.

"Secondary device": An apparatus mounted in the EV providing the contactless coupling to the primary device. In other words, the secondary device may be provided within the EV. When the EV is receiving power, the secondary device may transfer the power from the primary device to the EV. The secondary device may include the housing and all covers.

"Supply Power Electronics" indicates a portion of the SPC or GA regulating an output power level of the primary coil (or GA Coil) based on information from the vehicle. "EV Power Electronics" indicates a portion of the EVPC or VA monitoring specific on-vehicle parameters during the charging and initiating communications with the EVPC or GA to facilitate the adjustment of the output power level.

The Supply Power Electronics may be referred to as GA electronics, a GA controller, or a primary device communication controller (PDCC), and the EV Power Electronics may be referred to as VA electronics, a VA controller, or an electric vehicle communication controller (EVCC).

"Magnetic gap": A vertical distance between the plane of the higher of the top of the litz wire or the top of the magnetic material in the primary coil/GA Coil to the plane of the lower of the bottom of the litz wire or the magnetic material in the secondary coil/VA Coil when aligned.

"Ambient temperature": A ground-level temperature of the air measured at a subsystem under consideration and not in direct sun light.

"Vehicle ground clearance": A vertical distance between a ground surface and a lowest part of a vehicle floor pan.

"Vehicle magnetic ground clearance": A vertical distance between the plane of the lower of the bottom of the litz wire or the magnetic material in the secondary coil or VA Coil mounted in the vehicle to the ground surface.

"Secondary coil surface distance" or "VA coil magnetic surface distance": A distance between a plane of a nearest magnetic or conducting component surface to a lower external surface of the secondary coil or VA coil when mounted. Such a distance may include any protective coverings and additional items which may be packaged in the secondary coil or VA coil enclosure.

The secondary coil may be referred to as the VA coil, a vehicle coil, or a receiver coil. Similarly, the primary coil may be referred to as the GA coil or a transmit coil.

"Exposed conductive component": A conductive component of electrical equipment (e.g., an electric vehicle) that may be touched, and is not normally energized but may become energized when a fault occurs.

"Hazardous live component": A live component which, under certain conditions, may generate a harmful electric shock.

"Live component": Any conductor or conductive component intended to be electrically energized in normal use.

"Direct contact": A contact of a person with a live component. See IEC 61140 standard.

"Indirect contact": A contact of a person with exposed, conductive, and energized components made live by an insulation failure. See IEC 61140 standard.

"Alignment": A process of finding a relative position of the secondary device with respect to the primary device and/or a relative position of the primary device with respect to the secondary device for an efficient power transfer. In the present disclosure, the alignment may be directed to the alignment in the wireless power transfer system but may not be limited thereto.

"Pairing": A process of associating the vehicle (EV) with a single dedicated supply device (primary device) disposed such that the power transfer may occur. The pairing may include a process of associating the EVPC or VA controller with the SPC or GA controller of the charging spot.

The correlation or association process may include a process of establishing a relationship between two peer communication entities.

"Command and control communications": Communications for exchanging information required for starting, controlling, and ending the wireless power transfer process between an electric vehicle supply equipment and an electric vehicle.

"High-level communication (HLC)": A digital communication capable of handling all information not covered by the command and control communications. The data link of the HLC may use a power line communication (PLC) but is not limited thereto.

"Low-power excitation (LPE)": A technique of activating the supply device (or primary device) for the fine positioning and pairing so that the EV may detect the supply device, and vice versa.

"Service set identifier (SSID)": A unique identifier including 32-characters attached to a header of a packet transmitted on a wireless LAN. The SSID identifies the basic service set (BSS) to which the wireless device attempts to connect. The SSID distinguishes multiple wireless LANs. Therefore, all access points (APs) and all terminal/station devices that want to use a specific wireless LAN may use the same SSID. Devices that do not use a unique SSID are not able to join the BSS. Because the SSID is shown as plain text, the SSID may not provide any security features to the network.

"Extended service set identifier (ESSID)": A name of the network to which one desires to connect. ESSID is similar to SSID but a more extended concept.

"Basic service set identifier (BSSID)": BSSID including 48bits is used to distinguish a specific BSS. With an infrastructure BSS network, the BSSID may be configured for medium access control (MAC) of the AP equipment. For an independent BSS or Ad-hoc network, the BSSID may be generated with any value.

The charging station may include at least one GA and at least one GA controller configured to manage the at least one GA. The GA may include at least one wireless communication device. The charging station may refer to a place or location including at least one GA, which is provided in home, office, public place, road, parking area, etc.

In the present specification, "association" may be used as a term representing a procedure for establishing wireless communication between the electric vehicle communication controller (EVCC) and the supply equipment communication controller (SECC) controlling the charging infrastructure.

"Smart grid": A system implemented in which power plants, power generation units, and energy storage systems are connected in an intelligent manner through network facilities so as to exchange messages based on information and communication technologies.

"Charging station": A facility including one or more EVSEs, smart meters, and other technical equipment required to charge an EV.

"Electric Vehicle Supply Equipment (EVSE)": A device forming a part of the charging station that supplies energy to the electric vehicle via an outlet and being connected to a smart meter to measure an amount of transferred energy.

"Charge Point Operator (CPO)": A company or organization having an authority over the location of the charging station to allow a physical access to the charging station; or a communication node or entity managing the charging station and authorizing and controlling a charging process that takes place at each individual EVSE using information and communication technologies.

"Mobility Operator (MO)": A legal entity establishing a contractual relationship with an end user or a business entity as a legal basis for an authorization and a payment for the charging at the charging station.

E-Mobility Provider (EMP), E-Mobility Service Provider (EMSP), and Mobility Service Provider (MSP) may be used with similar meanings to the mobility operator.

"Plug-and-Charge (PnC)": A process in which the authentication, authorization, load control, and payment are automatically performed without any additional user interaction when a user simply plugs the electric vehicle into the EVSE. Alternatively, the PnC may refer to an identification and authorization mode for such an automatic process. The PnC may be performed by applying X.509 certificates and transmitting and verifying a signature.

"Public Key Infrastructure (PKI)": A system for creating, storing, redistributing, and revoking digital signatures that are used to verify that a specific public key belongs to a specific person or entity.

"External Identification Means (EIM)": Any external means by which a driver can authenticate and authorize himself or herself for a charging session at the charging station. Examples include a cash payment, a prepaid card, a credit card, a debit card, an NFC, a RFID, and an SMS. The EIM may form two typical authentication modes together with the PnC.

"Sales tariff': A function of providing price-related information over time. The sales tariff may refer to an input provided by the mobility operator to enable the EVCC side to calculate a charging schedule based on the sales tariff. The sales tariff may be a concept intended to provide incentives to electric vehicles that charge within a specific time slot for a preferred amount of electricity. A use case related to the sales tariff may be information on the electricity price provided by the mobility operator that authenticates the charging session based on a valid contract, in which case the contract may be authenticated by the driver or a car sharing operator to which the vehicle belongs by a contract certificate installed in the electric vehicle.

Additionally, the term "sales tariff" used herein may refer to a concept intended to encourage the use of renewable energy such as electric energy acquired by solar panels or wind turbines by providing incentives to electric vehicles charged during predictable time slots by the renewable energy. In some cases, the sales tariff may include not only the information on the electricity price but also the time slot associated with the price information.

"Secondary actor": An entity other than the EVCC or the SECC involved in the charging process. The secondary actor may be involved in the charging process by providing information related to the charging process. Examples of the secondary actor may include a charge point operator (CPO) and the mobility operator (MO).

"E-Mobility Account Identifier (EMAID)": A single contractual certificate issued for each legal contract concluded between the mobility operator and a customer for the electric vehicle charging. The EMAID may allow personal data to be pseudonymized and may be valid only for a limited time, e.g., the lifetime of the legal contract. Unlike the Vehicle Identification Number (VIN), the EMAID may not allow for a long-term evaluation of customer or vehicle data. The EMAID may be used as a temporary identifier that may be assigned using different authentication media for each temporary or short-term contract concluded for a family vehicle or a shared vehicle. A person may have a separate EMAID for each of several contracts with which the person is involved, so that the EMAIDs may be used for purposes other than personal identification information.

A term "vehicle-to-grid (V2G) communication" used herein is regulated in the ISO 15118 standard and can be designed to correspond to the Open Systems Interconnection (OSI) 7 layers. The OSI may be 'a conceptual model for standardizing communication functions of a communication or computing system regardless of an internal structure and technology involved.'

The ISO 15118 standard is characterized in that it is intended to establish and implement the charging and payment process for the electric vehicle and may adopt and utilize various information and communication technologies for this objective. Since the objective of the ISO 15118 standard is to establish the charging and payment process for the electric vehicle although the standard is related to the information and communication technology elements mapped to the OSI 7 layers, the special features of the application may be primarily addressed.

The V2G communication interface specified in the ISO 15118 standard may include digital, IP-based protocols. The communications between the EV and the EVSE and the communications between the EVCC and the SECC may be included in the V2G communication interface specified in the ISO 15118 standard.

The V2G communication interface and the ISO 15118 standard may be intended to enable a user-friendly mechanism for performing an authentication, authorization, and payment at the charging station without requiring a separate user interaction.

An electric vehicle may be integrated into the smart grid to provide a flexible load control and valuable grid services without compromising driver habits. To avoid the need for additional grid components to supply power during a peak demand caused by a variety of load fluctuations, the energy stored in the electric vehicle may be considered as one of energy sources in the smart grid. Furthermore, in order to encourage the long-term expansion of renewable energy sources, providing appropriate incentives to the electric vehicles may also be considered as a means to activate the smart grid.

A vehicle-to-grid transfer protocol (V2GTP) at OSI Layer 5 may be understood as a session wrapper for an application-layer message. The application-layer message may be referred to as a so-called V2G message. The V2GTP protocol may include definitions for a header and a payload to efficiently distinguish and process V2G messages.

"Original Equipment Manufacturer (OEM)": A server operated by a producer who manufactures the EV and may refer to a Root Certification Authority (RootCA) issuing an OEM RootCA Certificate.

"Charging station operator (CSO)": A party responsible for the provisioning and operation of a charging infrastructure and managing electricity to provide a requested energy transfer service. The charging station operator may be a term having a same concept as a charge point operator (CPO).

"Charge Service Provider (CSP)": An entity managing and authenticating EV user's credentials and providing the billing and other value-added services to customers. The CSP may be considered as a special type of the mobility operator (MO) and may be integrated with the MO.

"Clearing House (CH)": An entity handling cooperation between the MOs, CSPs, and CSOs. In particular, the clearing house may perform a role of an intermediate actor facilitating authorization, billing, and settling procedure for the EV charging service roaming, between two clearing parties.

"Roaming": Information changes and a scheme and provisions between CSPs, which allows EV users to access the charging services provided by multiple CSPs or CSOs pertaining to multiple e-mobility networks by using a single credential and contract.

"Credential": A physical or digital asset representing an identity of an EV or EV owner, and may include a password used to verify the identity, a public key and private key pair used in a public key encryption algorithm, a public key certificate issued by a certification authority, information related to a trusted root certification authority.

"Certificate": An electronic document binding a public key to an ID by a digital signature.

"Service session": A collection of services around a charge point related to the charging of an EV assigned to a specific customer in a specific timeframe with a unique identifier.

"V2G charging loop" or "V2G charging loop": A messaging process according to an ISO 15118 standard to control a charging process.

"Renegotiation": A messaging process between the EV and the EVSE during a V2G communication session to renew a charging schedule by retransmitting parameters to each other.

"Multiplexed communications": Communications between the EV and the EVSE through a V2GTP connection to transfer multiple messages having different types of payloads.

"V2G transfer protocol (V2GTP)": A communication protocol to transfer V2G messages between two V2GTP entities.

"V2GTP entity": A V2G entity supporting the V2G transport protocol.

"Vendor specific element (VSE)" may refer to a data format that contains information on a type of an EVSE available at a current location in ISO 15118-based communications.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

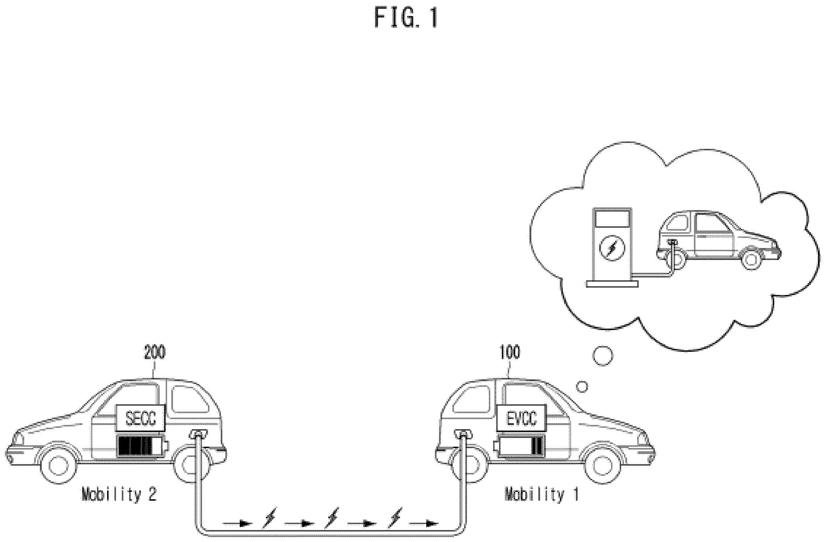

Hereinafter, details of the present disclosure will be described through exemplary embodiments shown in FIGS. 1 to 8.

FIG. 1 is a conceptual diagram illustrating a process in which power is supplied from a mobile power supply device to an electric mobility according to an exemplary embodiment of the present disclosure.

As shown in FIG. 1, a mobility 1 100 may refer to a general electric mobility including a general electric vehicle such as an electric vehicle, a hybrid electric vehicle, or a plug-in hybrid electric vehicle (PHEV). A mobility 2 200 may be a mobile power supply device. The mobility 2 200 may support a function of supplying power to another mobility as an electric mobility. The mobility 2 200 may also refer to a general electric mobility including various types of electric mobility such as electric vehicles, hybrid electric vehicles, PHEVs, etc.

A process of supplying power from the mobile power supply device to the electric mobility according to an exemplary embodiment of the present disclosure may be referred to as V2V (Vehicle-to-Vehicle) charging.

The mobility 1 100 may receive power from the electric mobility 2 200 as if receiving power from a typical EVSE.

The mobility 1 100 may include an EVCC capable of participating in a charging process and a communication protocol for the charging process.

The mobility 2 200 may serve as an EVSE.

The exemplary embodiments of the present disclosure may include a plurality of use cases of V2V charging.

As one exemplary embodiment (Use Case 1: UC1), the V2V charging may be a function of useful free charging. For example, when a vehicle of a family member, friend, or colleague is discharged, the V2V charging may provide charging for the discharged mobility as a free offer.

As one exemplary embodiment (Use Case 2: UC2), the V2V charging may be a type of mobile charging service. The mobility 2 200 may be a mobility and/or a mobile power supply device operating under the management of a mobile charging service provider. The service provider may dispatch a mobile power supply device with sufficient power supply capacity to a customer's electric mobility at a road or specific location. The sufficient power supply capacity of the mobile power supply device may refer not only to the power supply specification of the mobile power supply device but also to a state of charge (SoC) sufficiently charged to supply the target amount of power.

As one exemplary embodiment (Use Case 3: UC3), the V2V charging may be a charging service based on peer-to-peer trading. The use case according to this exemplary embodiment may be provided as a means of transaction of electric energy between individuals. For example, the mobility 2 200 of owner 'A' may charge the mobility 1 100 of owner 'B' as a trade.

In the exemplary embodiments of the present disclosure, various types of electric mobility may serve as the mobility 1 100 or the mobility 2 200.

The exemplary embodiment of the V2V charging shown in FIG. 1 may be provided as a means for the mobility 1 100 to obtain temporarily travelable power before receiving power from an EVSE having a fixed location. That is, a target amount of power for temporary movement may be set so that the mobility 1 100 may reach a nearby fixed EVSE or charging station, and power based on the target amount may be supplied through the V2V charging.

Whether the required travel distance obtained through a process of searching for a nearby fixed EVSE or charging station may be reached with a state of charge (SoC) of the battery of the mobility 1 100 may be determined.

When supplementary charging is required for the mobility 1 100 to reach a nearby fixed EVSE or charging station, the mobility 2 200 capable of supplying supplementary required power to the mobility 1 100 may be searched.

According to an exemplary embodiment of the present disclosure, the mobility 1 100 may supply power to another electric mobility like a conventional fixed electric vehicle supply equipment (EVSE), and may be proposed as a mobile power supply device in the concept of a mobile EVSE, unlike a fixed EVSE.

In the present disclosure, the mobile power supply device may collectively refer to an electric vehicle (EV) capable of supplying power to another electric mobility, a mobile charging station (CS), a mobile EVSE, and the like.

The mobile power supply device may include a supply equipment communication controller (SECC). The mobile power supply device may receive power from another (fixed or mobile) power supply device and may include an electric vehicle communication controller (EVCC) associated with the activity of receiving power. In one exemplary embodiment of the present disclosure, the SECC and the EVCC may be integrally combined. In another exemplary embodiment of the present disclosure, the SECC and the EVCC may be separately configured.

Some of the technologies applied to the conventional fixed EVSE or CS may be applied to the mobile power supply device of the present disclosure, as long as not conflicting with the purpose of the present disclosure.

In an exemplary embodiment of the present disclosure, power may be supplied from the mobility 2 200 to the mobility 1 100 via a wired method, a wireless method, or a wired-wireless hybrid method.

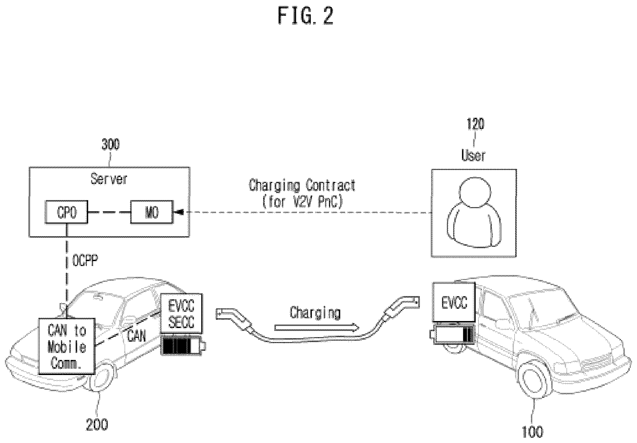

FIG. 2 is a conceptual diagram more particularly illustrating a process in which power is supplied from a mobile power supply device to an electric mobility according to another exemplary embodiment of the present disclosure.

As shown in FIG. 2, a supply chain and participating players involved in the V2V charging are illustrated. The overlapping description with FIG. 1 is omitted.

According to an exemplary embodiment of the present disclosure, in UC2, the amount of power supplied from the mobility 2 200 to the mobility 1 100 and the corresponding fee may be managed and processed by a server 300.

In another exemplary embodiment of the present disclosure, even in UC1 and UC3, the amount of power supplied from the mobility 2 200 to the mobility 1 100 may be managed and processed by the server 300.

For example, information on the amount of power required for the mobility 1 100 to travel to a nearby fixed EVSE or charging station may be delivered from the server 300 to the mobility 2 200, based on the location at which the mobility 2 200 is charged, the distance to the nearby fixed EVSE or charging station, and the remaining SoC of the mobility 1 100.

Referring again to FIG. 2, a user 120 of the mobility 1 100 may have a charging contract related to V2V plug and charge (PnC) with a charging point operator (CPO) or a mobility operator (MO). The V2V charging contract may be pre-established or may be established at the time when V2V charging is required between the user 120 and the server 300.

As shown in FIG. 2, the user 120 may have a V2V charging contract with the MO, and the mobility 2 200, which is in a special relationship with the CPO associated with the MO, may move near the mobility 1 100 and supply power to the mobility 1 100.

The server 300, especially the CPO and the mobility 2 200, may communicate via a communication technology such as OCPP. Within the mobility 2 200, the information transmitted and received through communication with the CPO may be delivered to the EVCC or SECC in the mobility 2 200 via a CAN to Mobile Communication technology.

For example, the mobility operator (MO) may be implemented by one or more servers, such as the server 300 (including a cloud system). The MO is a service provider that establishes a contractual relationship with the user 120 so that the electric vehicle driver or the user 120 may receive power at the mobility 1 100.

Assuming UC2, in order for the mobility 1 100 to receive power from the mobility 2 200, the mobility 2 200 may be under the management of the MO and CPO, or a roaming scenario through the MO and the CPO between the mobility 1 100 and the mobility 2 200 may be required.

A charging station operator (CSO) or a charging point operator (CPO) may be not only responsible for operating the charging station but also managing electricity to provide energy transmission services. The CSO or the CPO may be implemented by one or more servers, such as the server 300 (including a cloud system). The CSO or the CPO may be operated by, for example, a mobile power supply device manufacturer, an electric vehicle manufacturer, or an electricity supplier.

Although the server 300 is illustrated as including the CPO and the MO in FIG. 2, in another exemplary embodiment of the present disclosure, the server 300 may be a concept collectively referring to secondary actors involved in UC2.

In the exemplary embodiments of the present disclosure, secondary actors corresponding to the server 300 may include a charging station management system (CSMS), a CSO, or a CPO.

According to an exemplary embodiment of the present disclosure, the CSMS may be capable of communicating with one or more mobile power supply devices and monitoring and managing the status of the one or more mobile power supply devices under a specific region or specific conditions. The CSMS may correspond to or be included in the server 300 and may monitor and manage the status of the mobility 2 200 among the mobile power supply devices.

According to an exemplary embodiment of the present disclosure, the CSO or the CPO may monitor the status of one or more mobile power supply devices under a specific region or specific conditions, identify/authenticate/authorize/verify a contract between the electric mobility that receives power and the server 300, or count information on power supplied from at least one of the mobile power supply devices to the electric mobility. The CSO or the CPO may correspond to or be included in the server 300, identify/authenticate/authorize/verify a contract with the mobility 1 100, or count information on power supplied from the mobility 2 200 to the mobility 1 100.

In the exemplary embodiments of the present disclosure, secondary actors corresponding to the server 300 may include a charging service provider (CSP), a mobility operator (MO), an e-mobility provider (EMP), an e-mobility service provider (EMSP), a mobility service provider (MSP), a flexibility operator (FO), a clearing house (CH), etc.

According to an exemplary embodiment of the present disclosure, the CSP, MO, EMP, EMSP, MSP, or FO may monitor the status of one or more mobile power supply devices under a specific region or condition, provide a contract between the electric mobility receiving power and the server 300 to another secondary actor, identify/authenticate/authorize/verify the contract, or count the information on power supplied from at least one of the mobile power supply devices to the electric mobility.

According to an exemplary embodiment of the present disclosure, the CH may monitor the status of one or more mobile power supply devices under a specific region or condition, count the information on power supplied from at least one of the mobile power supply devices to the electric mobility, and settle the fee for the power based on a tariff.

In order to implement an EVSE or a CS related to the mobile power supply device according to the above-described exemplary embodiment of the present disclosure, a configuration implemented to support mobility may be differentiated from conventional EVSE or CS.

In order to implement a CSMS, CSO, CPO, CSP, MO, EMP, EMSP, MSP, FO, or CH for the mobile power supply device according to the above-described exemplary embodiment of the present disclosure, a configuration implemented to support mobility of the mobile power supply device may be differentiated from a conventional CSMS, CSO, CPO, CSP, MO, EMP, EMSP, MSP, FO, or CH.

A charging service provider (CSP) may manage and authenticate the credential of the user 120 and provide billing and other value-added services to the customer. The CSP may be considered as a special type of the MO and may be implemented in a form combined with the MO. A plurality of CSPs may exist, and each CSP may be linked with one or more CSOs, and the CSP and the one or more CSOs may constitute one charging network.

The mobility 1 100 may receive an automatic charging service in a plug-and-charge or park-and-charge manner from the mobility 2 200 under the management of a CSO/CPO associated with an MO/CSP/EMSP in a contractual relationship with the mobility 1 100. However, when the mobility 1 100 desires to receive power from the mobility 2 200 managed by the CSO/CPO associated with another MO/CSP/EMSP, roaming may be required.

Each MO/CSP/EMSP may exchange information with another MO/CSP/EMSP, a CSO/CPO in a different network or the like for roaming, and may also exchange information with the clearing house (CH). The matters related to roaming may be subject to the ISO 63119 standard.

The MO/CSP/EMSP in a contractual relationship with the mobility 1 100 may be referred to as a Home-MO/CSP/EMSP, and the CSO/CPO associated with the Home-MO/CSP/EMSP may be referred to as a Home-CSO/CPO. The MO/CSP/EMSP in a contractual relationship with the mobility 2 200 may be referred to as a Visited-MO/CSP/EMSP, and the CSO/CPO associated with the Visited-MO/CSP/EMSP may be referred to as a Visited-CSO/CPO.

When the mobility 1 100 is located in a service area of the Visited-MO/CSP/EMSP rather than a service area of the Home-MO/CSP/EMSP, or when it is difficult for the mobility 1 100 to reach a mobile power supply device managed by the Home-CSO/CPO, the mobility 2 200 under the management of the Visited-CSO/CPO may approach the mobility 1 100 and supply power. The contract between the mobility 1 100 and the Home-MO/CSP/EMSP may be transferred to the Visited-CSO/CPO via a roaming service, and the mobility 2 200 may be authorized to approach the mobility 1 100 and supply power through cooperation between the Home-MO/CSP/EMSP and the Visited-CSO/CPO.

The clearing house (CH) may handle cooperation matters between a plurality of MO/CSP/EMSPs. The CH may play an intermediate actor role in facilitating authorization, billing, and settlement procedures for electric mobility charging service roaming between two clearing parties. The CH may be connected among a plurality of MO/CSP/EMSPs or CSO/CPOs to support roaming.

The charge for the supplied power may be adjusted based on power demand, power factor, supply availability, or other factors depending on the time period. The charge for the supplied power may be determined based on the state of the charging infrastructure associated with the server 300.

In exemplary embodiments of the present disclosure, secondary actors may appear to refer to individuals or organizations of individuals. However, including in the claims, these expressions are assigned shortened and functional names for readability, and are implemented by hardware, software, and/or a combination thereof. In one exemplary embodiment, these components may be implemented as server devices that allow access by other devices over a network such as the Internet through a combination of hardware and software. Since these components are functionally distinguished, two or more of the components may be encapsulated and executed within a single physical device, or may be integrated into a single program. For example, a single entity may perform both the roles of a CSO/CPO and a CSP/MO/EMSP, and another single entity may perform both the roles of a CSO/CPO and a CSMS. One or more of the above components may also be reorganized to have different appearances and names.

EV charging services and related infrastructure are fields where various industrial sectors, such as automotive, power grid, energy, transportation, communication, finance, and consumer electronics, converge. Standardization efforts have been carried out from various perspectives, and in addition to standardization by multiple international standardization organizations, standardization at the individual country level has also progressed, resulting in many terms referring to similar concepts. In particular, the term "charging station operator (CSO)" may be used interchangeably with "charge point operator (CPO)," since roles and functions overlap, although there may be minor functional or nuanced differences. In addition, "charging service provider (CSP)" may share roles and functions at least partially with "mobility operator (MO)," and these terms may be used interchangeably or even confused in usage. These real-world circumstances should be taken into account when interpreting the present specification, including the claims.

The mobility 2 200 serving as a mobile power supply device needs to have both characteristics/functions of an EVCC and an SECC. The mobility 1 100 receiving power may be implemented without significant differences from a conventional EVCC, except that the counterpart is mobile.

In one exemplary embodiment of the present disclosure, a dedicated V2V charging cable may be required for V2V charging. In another exemplary embodiment of the present disclosure, V2V charging may be sufficiently performed using a general cable for electric mobility charging.

After communication connection/setup between the mobility 1 100 and the mobility 2 200 is established, V2V charging may be performed using an existing charging communication protocol.

However, before the communication connection/setup between the mobility 1 100 and the mobility 2 200 is established, or before it is determined whether the mobility 2 200 supplies power to the mobility 1 100, extra information regarding the mobility of the power supply device may be required.

The related infrastructure and environment for implementing V2V charging may partially utilize the specifications of V2G (Vehicle-to-Grid) charging defined in standards such as the JWGL11 standard.

For managing a charger-vehicle relationship, follow-up such as bootstrapping may generally be required. From the perspective of service control, the location of the charger/charging station and the battery level may be monitored and managed. When a mobile charger/charging station is involved in a transaction with mobility, the mobile charger/charging station may be required to transmit a report to a server in order to manage the transaction history.

The mobile power supply device proposed in the present disclosure may be referred to as a mobile CS or a Vehicular CS (VCS). The mobile CS or VCS is required to be mobile and to have a battery. The mobile CS or VCS may be owned by an individual (UC 1 or UC 3), and does not necessarily have to be owned by a CSO/CPO.

In V2V charging, the structure of a connector and an inlet may also be applied, and existing standard regulations regarding opening/closing of the inlet and opening/closing of the connector may be applicable. The existing standard regulations regarding docking and/or undocking between the power supplying side and the power receiving side may also be applied to V2V charging.

An improved proposal for implementing V2V charging in relation to the IEC 63110-1 standard may include a method for defining additional information of a charger or a charging station. The information of the charger or charging station may further include information regarding mobility.

In addition, an improved proposal for implementing V2V charging may include a process of mobile charging request handling.

In addition, an improved proposal for implementing V2V charging may include a process of SDR generation for mobile charging.

The SDR may be a specification that partially adopts the concept of a service detail record (SDR) as defined in known standards such as ISO 15118, and may also be a specification with newly proposed features. The SDR may include a proposal for a specification that contains enhanced functions for implementing an exemplary embodiment of the present disclosure.

With the introduction of the V2V charging concept, the concept of a charging station may be extended. While a conventional CS merely supplied electricity at a fixed location, it may now function as a mobile station, and various specifications for this may be required.

An improved proposal for implementing V2V charging with respect to the IEC 63110-2 standard may include adding a charging station type that may define whether it is mobile or fixed.

An improved proposal for implementing V2V charging may include a proposal to include location within the SDR.

An improved proposal for implementing V2V charging may include the definition of V2V location, travel direction, distance limit, time window, battery status update [SoC], available energy, price to charging station, and an updated price structure.

The mobile power supply device may include a plurality of battery packs and EVSEs within a single electric mobility. The status information such as SoC of each battery and EVSE may be managed individually, and each of the batteries and EVSEs may individually provide power supply services.

In the infrastructure shown in the exemplary embodiments of FIGS. 1 and 2, a public key infrastructure (PKI) is used as a basis for operating plug-and-charge (PnC). PKI provides a framework for verifying the identity of people and devices, enabling secure communication, and ensuring controlled access to resources. The PKI-based certificate hierarchy is defined in the ISO 15118-20 standard.

In the exemplary embodiment of FIG. 2, a user 120 is not necessarily required to be located together with the mobility 1 100, and may request a mobile charging service by communicating with a MO/CSP/EMSP, etc. through a separate communication terminal while being away from the location of the mobility 1 100. In this case, the location of the mobility 1 100 may need to be delivered to the MO/CSP/EMSP, or the CSO/CPO, etc.

When roaming is required for charging the mobility 1 100, the user 120 may request a mobile charging service by communicating with a Home-MO/CSP/EMSP, etc. In this case, the location of the mobility 1 100 may need to be delivered to the Home-MO/CSP/EMSP, or the Visited-CSO/CPO, etc.

The user 120 may connect to the Home-MO/CSP/EMSP, authenticate the user, and request a mobile charging service for the mobility 1 100.

The target departure time when the mobility 1 100 intends to leave the charging spot, and the target SoC may be delivered to service providers.

When no candidate mobile power supply device that satisfies the initial requirements (location, target departure time, current SoC, target SoC, etc.) is found, the user 120 may re-request the mobile charging service by modifying part of the requirements (target departure time, target SoC). The user 120 may continue to modify the requirements and request the service until a mobile power supply device is found. In some exemplary embodiments, such requirements may be referred to as mobility needs (MN). The mobility needs may include a minimum target SoC instead of a target SoC, may be modified by the user 120, and may be adjusted during negotiation with the service provider. The minimum target SoC may represent the minimum travelable distance of the mobility 1 100, and when the minimum target SoC or minimum travelable distance is adjusted, the distance to a nearby fixed EVSE or CS may be considered.

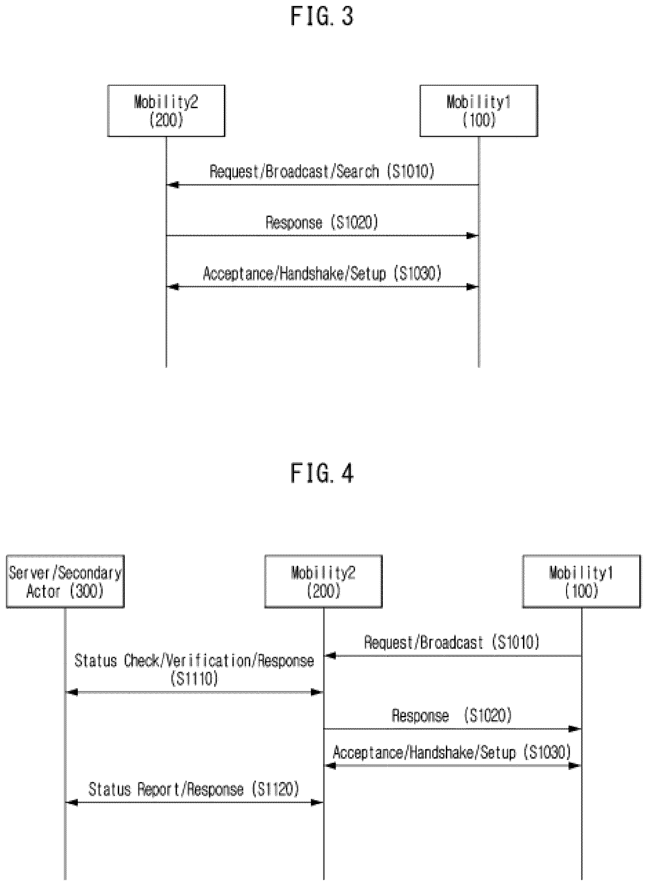

FIG. 3 is a conceptual diagram illustrating a protocol corresponding to a part of a charging process in which power is supplied from a mobile power supply device to an electric mobility according to an exemplary embodiment of the present disclosure.

FIG. 4 is a conceptual diagram illustrating a protocol corresponding to a part of a charging process in which power is supplied from a mobile power supply device to an electric mobility according to another exemplary embodiment of the present disclosure.

As shown in FIGS. 3 and 4, the mobility 1 100 may broadcast a message including a request for a mobile charging service to search for a candidate for a mobile power supply apparatus in step S1010.

Between the mobility 2 200 and a secondary actor server 300, a process of checking, verifying, and responding to the status of the mobility 2 200 may be performed in step S 1110.

A request message from the mobility 1 100 may be a Mobile Charging Request message in which an electric mobility that wishes to receive power searches for a mobile power supply apparatus.

In FIGS. 3 and 4, exemplary embodiments are illustrated in which the mobility 2 200 responds to the mobility 1 100 after receiving the Mobile Charging Request message in step S1010, either independently (UC1 or UC3) or in cooperation with the secondary actor server 300 (UC2), in step S1020. However, the spirit of the present disclosure is not limited thereto.

In one alternative exemplary embodiment of FIGS. 3 and 4, the secondary actor server 300, such as CSO/CPO/CSMS, etc., may receive the Mobile Charging Request message, transmit the message to the mobility 2 200, and the mobility 2 200 may respond to the mobility 1 100.

The secondary actor server 300 may select the mobility 2 200 as a candidate that best matches the Mobile Charging Request message among the mobile power supply apparatuses under management and transmit the Mobile Charging Request message to the mobility 2 200. In addition, the secondary actor server 300 may further transmit a command instructing the acceptance of the Mobile Charging Request to the mobility 2 200 along with the Mobile Charging Request message.

The Mobile Charging Request message may include the customer EV (E-Mobility) location, an energy request [Wh], a charging start time, a target departure time, a maximum power limit, a maximum current limit, and/or a maximum voltage limit.

The mobility 2 200 may respond to the request from the mobility 1 100 in step S1020. The step S1020 may be performed by the mobility 2 200 transmitting a Mobile Charging Response message.

The Mobile Charging Response message may include acceptance of the request: Y/N, an expected arrival time, an expected service charge [$], an expected duration of charging, or the like.

A handshake process including the acceptance and an acknowledgment of the request may be performed between the mobility 2 200 and the mobility 1 100, and a communication connection may be established between the mobility 1 100 and the mobility 2 200 in step S1030.

The mobility 2 200 may transmit a status report including the result of the handshake and the communication setup with the mobility 1 100 to the secondary actor server 300, and the secondary actor server 300 may respond to the status report in step S1120.

In one alternative exemplary embodiment of the present disclosure, the step S1120 may be performed after the mobility 2 200 has moved to the location of the mobility 1 100. In another alternative exemplary embodiment of the present disclosure, after the docking is performed by the mobility 2 200 in order to supply power to the mobility 1 100, a status report including whether a safe charging condition has been satisfied may be transmitted to the secondary actor server 300 in step S1120.

In the exemplary embodiments of FIGS. 3 and 4, exemplary embodiments are illustrated in which each step is initiated by the mobility 1 100. In an alternative exemplary embodiment of the present disclosure, the mobility 2 200 or CSO/CPO/CSMS to which the mobility 2 200 belongs may perform an initial action to start the mobile charging service.

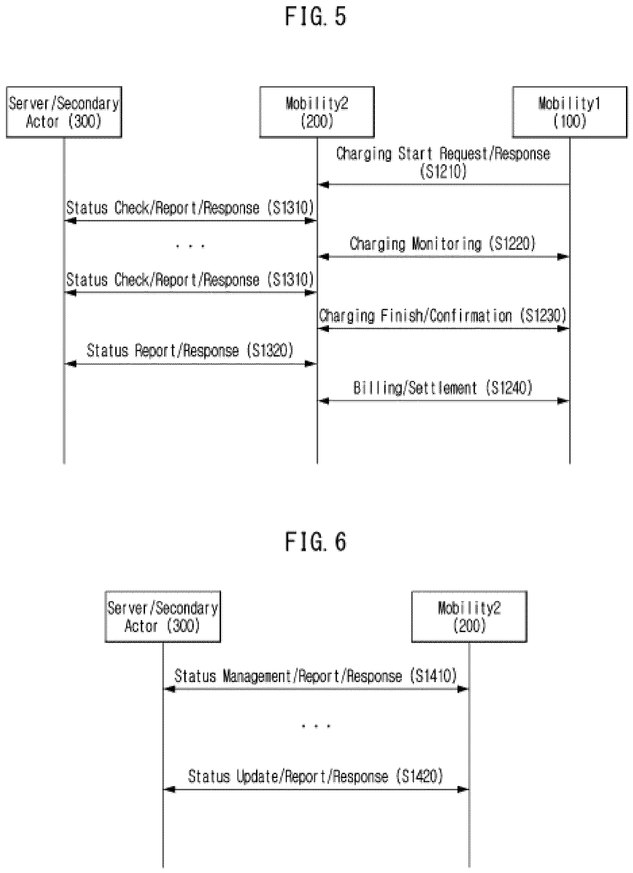

FIG. 5 is a conceptual diagram illustrating a protocol corresponding to a part of a charging process in which power is supplied from a mobile power supply device to an electric mobility according to another exemplary embodiment of the present disclosure.

As shown in FIG. 5, after the acceptance/handshake/setup step (S1030), the status report/response step (S1120), the docking between the mobility 1 100 and the mobility 2 200, and the check of whether a safe charging condition is satisfied have been completed, a request to start the charging process may be made from the mobility 1 100 to the mobility 2 200 in step S1210.

In response to step S1210, the mobility 2 200 may transmit a response message to the mobility 1 100.

Although not shown in FIG. 5, after the request of step S1210 and the corresponding response are exchanged, power may be supplied from the mobility 2 200 to the mobility 1 100.

While power is being supplied from the mobility 2 200 to the mobility 1 100, information for monitoring the charging status may be transmitted and received between the mobility 2 200 and the mobility 1 100 in step S1220.

When the charging target is achieved, the charging process may be completed. The finish of the charging process may be checked based on the transmission and reception of messages between the mobility 2 200 and the mobility 1 100 in step S1230.

When the charging process is successfully completed, a billing/settlement process may be performed based on the supplied electric power, in step S1240.

Although FIG. 5 illustrates a case where the billing/settlement step S1240 is performed between the mobility 2 200 and the mobility 1 100, in an alternative exemplary embodiment of the present disclosure, the billing/settlement step S1240 may be performed between the secondary actor server 300 and the user 120.

During the course in which the charging process for supplying power from the mobility 2 200 to the mobility 1 100 starts and proceeds, the mobility 2 200 may periodically or non-periodically report the charging status to the secondary actor server 300 in step S1310. Step S1310 may be initiated by a confirmation request from the secondary actor server 300 or may be initiated by a report from the mobility 2 200. Step S1310 may be initiated by either the mobility 2 200 or the secondary actor server 300, and completed by the response from the other.

When the successful finish of the charging process is confirmed in step S1230, the mobility 2 200 may report status to the secondary actor server 300 in step S1320.

In step S1320, the mobility 2 200 may generate and report an SDR (Service Detail Report). As described above, one exemplary embodiment of the present disclosure may include an SDR generation process for mobile charging.

The SDR may be a specification that partially adopts the concept of the SDR (Service Detail Record) defined in known standards such as ISO 15118, and may be a specification with additional proposals, including improvements to implement the exemplary embodiment of the present disclosure.

The SDR may include the location of service, request time, arrival time (the time at which the mobility 2 200 arrives at the location of the mobility 1 100), finished time, and distance traveled for service.

FIG. 6 is a conceptual diagram illustrating a protocol corresponding to a part of the charging process in which electric power is supplied from a mobile power supply apparatus to electric mobility according to another exemplary embodiment of the present disclosure.

As shown in FIG. 6, the process is illustrated in which the status information of the mobile power supply apparatus, i.e., the mobility 2 200, is monitored and reported/responded to under the management of the secondary actor server 300.

Under normal conditions, the mobility 2 200 is in communication connection with the secondary actor server 300, and information such as the charging availability and the amount of available charging power of the mobility 2 200 is shared with the secondary actor server 300. The secondary actor server 300 may manage the mobility 2 200 based on such information.

However, when the mobility 2 200 becomes disconnected or loses communication with the secondary actor server 300 due to a temporary communication failure or departure from a regional range, the secondary actor server 300 may check that the mobility 2 200 is in a state in which service is unavailable and may update the status information of the mobility 2 200.

When the temporary failure is resolved and the mobility 2 200 returns within the regional range or restores communication with the secondary actor server 300, communication between the secondary actor server 300 and the mobility 2 200 may be set up or restored.

A standardized bootstrap process may be applied in the communication recovery process, and a generalized connection recovery process between Internet of Things (IoT) edge devices and the server may also be applied.

Referring again to FIG. 6, the status information of the mobility 2 200 may be reported to the secondary actor server 300 between the mobility 2 200 and the secondary actor server 300 in step S1410.

The secondary actor server 300 may request the mobility 2 200 to provide status information for management. The mobility 2 200 may report the status information to the secondary actor server 300 in response to the status information request. When there is no response from the mobility 2 200 within a predetermined time interval, the secondary actor server 300 may request the status information again. When the secondary actor server 300 receives the status information from the mobility 2 200, the secondary actor server 300 may respond with an acknowledgment message.

When the status information of the mobility 2 200 needs to be updated, the secondary actor server 300 may request the status update of the mobility 2 200 in step S 1420.

The status update may include a status change of the mobility 2 200, a restoration of communication after disconnection, or the like.

Status information of the mobility 2 200 as a mobile power supply device may be periodically updated. Alternatively, the status information of the mobility 2 200 as the mobile power supply device may be updated when a charging request is received from a customer EV/E-Mobility. The status information of the mobility 2 200 as the mobile power supply device may be continuously updated to determine the availability of the mobility 2 200 for the charging request received from the customer EV/E-Mobility.

In this case, the status information may include location (GPS coordinate), travel direction, distance limit, travel availability, available energy for supply/discharge, current/residual state of charge (SoC), mobility status, maximum distance to travel for discharging, earliest time to depart for discharging, price table, or charging specification.

The mobility status may be one of discharging to another mobility, parked, charging, or traveling. The charging specification may include a maximum power limit, a maximum current limit, or a maximum voltage limit.

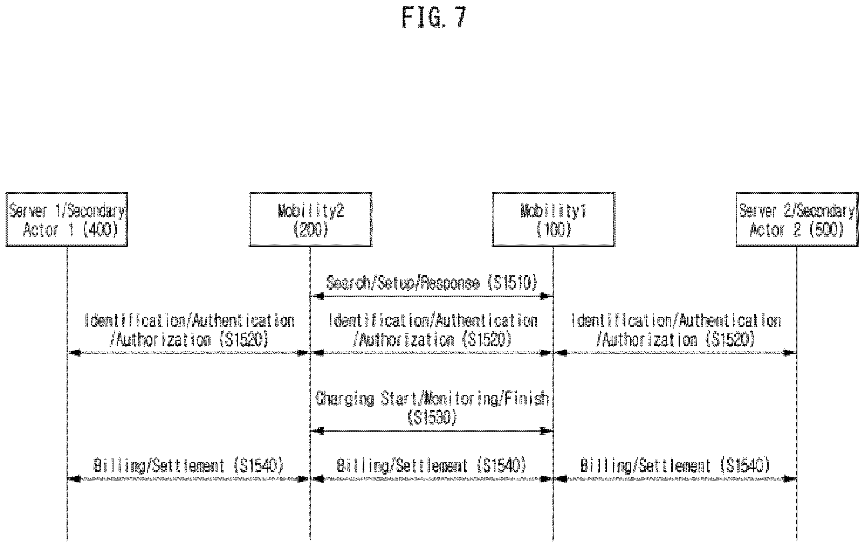

FIG. 7 is a conceptual diagram illustrating a protocol of a charging process in which power is supplied from a mobile power supply device to an electric mobility according to another exemplary embodiment of the present disclosure.

As shown in FIG. 7, a secondary actor server 1 400 in a contractual relationship with the mobility 1 100 and a secondary actor server 2 500 in a contractual relationship with the mobility 2 200 are illustrated.

By a roaming agreement between the secondary actor server 1 400 and the secondary actor server 2 500, information regarding the contract between the mobility 1 100 and the secondary actor server 1 400 may be shared with the secondary actor server 2 500.

The secondary actor server 1 400 may be a Home-MO/CSP/EMSP.

The secondary actor server 2 500 may be a Visited-CSO/CPO/CSMS.

As shown in FIGS. 3 to 7, a charging method performed by an electric mobility that receives power from a mobile power supply device according to an exemplary embodiment of the present disclosure may include performing a communication connection with the mobile power supply device in step S1510, performing one or more of mutual identification, authentication, or authorization between the mobile power supply device and the electric mobility in step S1520, starting a charging process in which power is supplied from the mobile power supply device, and ending the charging process in step S1530.

The charging method of the electric mobility according to an exemplary embodiment of the present disclosure may further include, before starting the charging process (before step S1210 or step S1520), sharing safe charging conditions between the mobile power supply device and the electric mobility in step S1120; and after starting the charging process (after step S1210), monitoring a charging-related parameter of the mobile power supply device or the electric mobility in step S1220.

The charging method of the electric mobility according to an exemplary embodiment of the present disclosure may further include identifying which one of a plurality of use cases the charging process belongs to, in order to determine whether to impose a fee for the power supplied to the electric mobility by the charging process. The one or more use cases may include useful free charging in an emergency situation, mobile charging service, or peer-to-peer trading of charging amounts.

The performing of the communication connection with the mobile power supply device in step S1510 may include searching for a candidate mobile power supply device capable of supplying power to the electric mobility, by the electric mobility, in step S1010, and receiving a response to the search from the mobile power supply device in step S1020.

The searching for the candidate mobile power supply device, by the electric mobility, in step S1010 may include broadcasting a message requesting charging by the electric mobility.

In the charging method of the electric mobility according to an exemplary embodiment of the present disclosure, the message requesting charging may include a location of the electric mobility (e.g., customer EV location), energy request [Wh], charging start time, target departure time, or charging specification. The charging specification may include a maximum power limit, a maximum current limit, or a maximum voltage limit.

In a power supply method of a mobile power supply device according to an exemplary embodiment of the present disclosure, a communication connection with an electric mobility receiving power may be performed in step S1510, one or more of mutual identification, authentication, or authorization between the mobile power supply device and the electric mobility may be performed in step S1520, a charging process supplying power to the electric mobility may be started, and the charging process may be terminated in step S1530.

In the power supply method of the mobile power supply device according to the exemplary embodiment of the present disclosure, before starting the charging process (before step S1210 or step S1520), safe charging conditions of the mobile power supply device and the electric mobility may be shared with the electric mobility in step S1120, and after starting the charging process (after step S1210), charging-related parameters of the mobile power supply device or the electric mobility may be monitored in step S1220.

In the power supply method of the mobile power supply device according to the exemplary embodiment of the present disclosure, in order to determine whether to impose a fee for the power supplied to the electric mobility through the charging process, the charging process may be identified as belonging to any one of one or more use cases. The one or more use cases may include useful free charging in an emergency situation, mobile charging service, or peer-to-peer trading of charging amounts.

In the power supply method of the mobile power supply device according to the exemplary embodiment of the present disclosure, a request message broadcast by the electric mobility to search for a candidate mobile power supply device capable of supplying power to the electric mobility may be received in step S1010, and a response message may be transmitted to the electric mobility in response to the request message in step S1020.

In the power supply method of the mobile power supply device according to the exemplary embodiment of the present disclosure, the response message may include acceptance of the request (Y/N), an expected arrival time, an expected service charge, an expected duration of charging, or a charging specification. The charging specification may include a maximum power limit, a maximum current limit, or a maximum voltage limit.

In the power supply method of the mobile power supply device according to the exemplary embodiment of the present disclosure, before starting the charging process (before step S1210 or step S1520), the driver of the electric mobility may be guided or the electric mobility may be controlled such that the mobile power supply device moves to the location of the electric mobility.

In the power supply method of the mobile power supply device according to the exemplary embodiment of the present disclosure, before starting the charging process (before step S1210 or step S 1520), whether to supply power to the electric mobility may be determined based on status information of the mobile power supply device. The status information may include a location (GPS coordinate), a travel direction, a distance limit, travel availability, an available energy amount for charging/discharging, a current state of charge (SoC), a mobility status, a maximum distance to travel for discharging, an earliest time to depart for discharging, a price table, or a charging specification.

The mobility status may be one of discharging to another mobility, parked, charging, or traveling. The charging specification may include a maximum power limit, a maximum current limit, or a maximum voltage limit.

In the power supply method of the mobile power supply device according to the exemplary embodiment of the present disclosure, when determining whether to supply power to the electric mobility, at least a part of the status information of the mobile power supply device may be obtained through communication with at least one secondary actor server, and whether to supply power to the electric mobility may be determined based on communication with at least one secondary actor server.

The process in which each mobile power supply device determines whether to supply power to the electric mobility may be partially or entirely performed in step S 1030 of FIG. 3 and FIG. 4 or in step S1520 of FIG. 7.

In the power supply method of the mobile power supply device according to the exemplary embodiment of the present disclosure, when the charging process ends, a report message may be transmitted to at least one secondary actor server in step S1320. The report message may include a location of service, a request time, an arrival time, a finished time, or a distance traveled for service. Step S1320 may be performed after step S1530 is performed and before step S1540 is performed, or after step S1230 is performed and before step S1240 is performed.

ISO 15118 may define parameters related to the above issues such as a tariff, metering confirmation, certificate installation data, PnC authorization data, OCSP response data, mobility needs data, etc.

Step S1520 may be performed between the mobility 1 100 and the mobility 2 200, or may be performed with participation of the secondary actor server 1 400 and/or the secondary actor server 2 500.

In step S1520, based on the Mobile Charging Request message of the mobility 1 100 broadcast in step S1510 or a subsequent message, the secondary actor server 1 400 having a contractual relationship with the mobility 1 100 may be identified.

In step S1520, a contract between the mobility 1 and the secondary actor server 1 may be identified, authenticated, authorized, or verified.

Although FIG. 7 illustrates a case where the mobility 1 participates in step S1520, in an alternative exemplary embodiment of the present disclosure, a user may participate in the identification, authentication, authorization, or verification of the contract in step S1520 instead of the mobility 1.

When the user or the mobility 1 accesses the secondary actor server 1, the user or the mobility 1 may be authenticated/authorized, or a contract between the user or the mobility 1 and the secondary actor server 1 may be identified, authenticated, authorized, or verified.

The secondary actor server 2 or the mobility 2 may identify and cross-verify the contract information delivered via roaming from the secondary actor server 1 and the contract information delivered from the mobility 1 or the user, and may authenticate/authorize/verify whether the contract is valid.

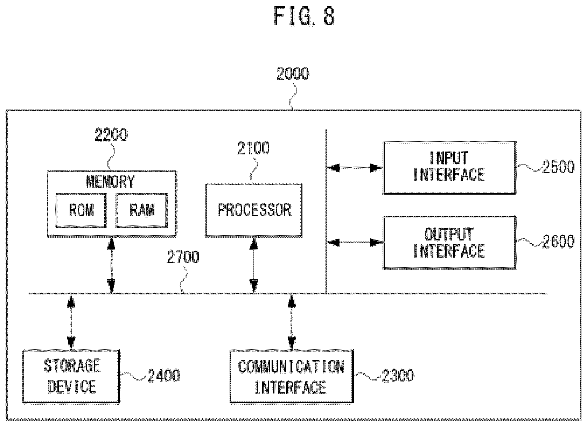

FIG. 8 is a conceptual block diagram illustrating an internal structure of a generalized computing system capable of implementing a power supply device, a communication and communication control device within the power supply device, a communication and communication control device within an electric mobility, secondary actors, and a user terminal according to an exemplary embodiment of the present disclosure.

The mobile power supply device may refer to a concept including a charging station (CS) or an electric vehicle supply equipment (EVSE). The communication and control device of the power supply device may refer to a concept including a supply equipment communication controller (SECC).

The communication and control device for charging within the electric mobility may refer to a concept including an electric vehicle communication controller (EVCC).

The mobile power supply device may also receive power from another CS or EVSE, and may include the EVCC in connection therewith.

Although not illustrated in the drawings of the exemplary embodiments shown in FIGS. 1 to 7, a processor and a memory may be electronically connected to the components, and the operations of the components may be controlled or managed by the processor.

The matters exemplified as part of the process for power supply (charging) in the exemplary embodiments of FIGS. 1 to 7 may be interpreted as communication and/or control methods for power supply (charging) within the scope consistent with the objectives of the present disclosure.

At least a part of the processes of the power supply (charging) method, the communication method for power supply (charging), or the control method for power supply (charging) according to an exemplary embodiment of the present disclosure may be executed by the computing system 2000 of FIG. 8.

As shown in FIG. 8, the computing system 2000 according to an embodiment of the present disclosure may be configured to include a processor 2100, a memory 2200, a communication interface 2300, a storage device 2400, an input interface 2500, an output interface 2600, and a bus 2700.

The computing system 2000 according to an embodiment of the present disclosure may include at least one processor 2100 and the memory 2200 storing program instructions instructing the at least one processor 2100 to perform at least one process step. At least some of the operations or process steps of the method according to an embodiment of the present disclosure may be performed by the at least one processor 2100 loading and executing the program instructions in the memory 2200.

The processor 2100 may include a central processing unit (CPU) or a graphics processing unit (GPU) or may be implemented by another kind of dedicated processor suitable for performing the method of the present disclosure.

Each of the memory 2200 and the storage device 2400 may be comprised of one or more of a volatile storage medium or a non-volatile storage medium. For example, the memory 2200 may be comprised of one or more of a read only memory (ROM) or a random access memory (RAM).

Additionally, the computing system 2000 may include the communication interface 2300 performing communications through a wireless communication network.

Additionally, the computing system 2000 may further include the storage device 2400, the input interface 2500, and the output interface 2600.

The components of the computing system 2000 may be connected to each other by the system bus 2700 to communicate with each other.

The apparatus including the processor 2100 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

A communication and control device for charging of an electric mobility, mounted in the electric mobility and performing communication and control functions related to charging according to an exemplary embodiment of the present disclosure, includes a memory 2200 that stores at least one instruction and a processor 2100 that executes at least one instruction. The processor 2100 may, by the at least one instruction, perform communication connection with the mobile power supply device in step S1510, perform one or more of mutual identification, authentication, or authorization between the mobile power supply device and the electric mobility in step S1520, start a charging process for receiving power from the mobile power supply device, and terminate the charging process in step S1530.

The processor 2100 may, by the at least one instruction, share safe charging conditions between the mobile power supply device and the electric mobility before the charging process is started, and monitor charging-related parameters of the mobile power supply device or the electric mobility after the charging process is started in step S1220.

When performing communication connection with the mobile power supply device in step S1510, the processor 2100 may search for a candidate mobile power supply device capable of supplying power to the electric mobility in step S1010, and may receive a response to the search from the mobile power supply device in step S1020.

When searching for the candidate mobile power supply device, the processor 2100 may broadcast a message requesting charging from the electric mobility in step S1010.

In the communication and control device for charging of the electric mobility according to an exemplary embodiment of the present disclosure, the message requesting charging may include a location of the electric mobility (e.g., customer EV location), an energy request [Wh], a charging start time, a target departure time, or a charging specification. The charging specification may include a maximum power limit, a maximum current limit, or a maximum voltage limit.

A communication and control device of the mobile power supply device according to an exemplary embodiment of the present disclosure includes a memory 2200 that stores at least one instruction and a processor 2100 that executes at least one instruction. The processor 2100 may, by the at least one instruction, perform communication connection with the electric mobility receiving power in step S1510, perform one or more of mutual identification, authentication, or authorization between the mobile power supply device and the electric mobility in step S1520, start a charging process for supplying power to the electric mobility, and terminate the charging process in step S1530.

The processor 2100 may, by the at least one instruction, share safe charging conditions with the electric mobility before the charging process is started, and monitor charging-related parameters of the mobile power supply device or the electric mobility after the charging process is started in step S1220.

The processor 2100 may, by the at least one instruction, identify which use case the charging process belongs to among one or more use cases, in order to determine whether to impose a fee for the power supplied to the electric mobility through the charging process. The one or more use cases may include useful free charging in an emergency situation, mobile charging service, or peer-to-peer trading of charging amounts.

When performing communication connection with the electric mobility, the processor 2100 may receive a request message that is broadcast by the electric mobility to search for a candidate mobile power supply device capable of supplying power to the electric mobility, and may transmit a response message to the electric mobility for the request message.

In the communication and control device of the mobile power supply device according to an exemplary embodiment of the present disclosure, the response message may include acceptance of the request (Y/N), an expected arrival time, an expected service charge, an expected duration of charging, or a charging specification. The charging specification may include a maximum power limit, a maximum current limit, or a maximum voltage limit.

The processor 2100 may, by the at least one instruction, guide a driver of the electric mobility or control the electric mobility such that the mobile power supply device moves to a location of the electric mobility before the charging process is started.

The processor 2100 may, by the at least one instruction, determine whether to supply power to the electric mobility based on status information of the mobile power supply device before the charging process is started. The status information may include a location (GPS coordinate), travel direction, distance limit, availability of movement, available energy for supplying/discharging, current/residual state of charge (SoC), mobility status, maximum distance to travel for discharging, earliest time to depart for discharging, a price table, or a charging specification.

The mobility status may be one of discharging to another mobility, parked, charging, or traveling. The charging specification may include a maximum power limit, a maximum current limit, or a maximum voltage limit.

When determining whether to supply power to the electric mobility before the charging process is started, the processor 2100 may obtain at least part of the status information of the mobile power supply device through communication with at least one secondary actor server, and may determine whether to supply power to the electric mobility based on the communication with the at least one secondary actor server.

The processor 2100 may, by the at least one instruction, transmit a report message to the at least one secondary actor server when the charging process is terminated. The report message may include a location of service, a request time, an arrival time, a finished time, or a distance traveled for service.

In most of the exemplary embodiments described above, the descriptions are mainly based on a method in which the mobility receiving power transmits communication protocols, messages, or parameters first to the device supplying power. However, the present disclosure is not limited to specific embodiments, and may also be configured so that the device supplying power transmits communication protocols, messages, or parameters first to the mobility receiving power. In this case, the sender in such an embodiment becomes the receiver, and the receiver becomes the sender. It is apparent that the same functions are essentially provided, the same processes of information handling are performed, and the same technical features are maintained.

The apparatus and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

## Claims

1. A charging method performed in an electric mobility that receives power from a mobile power supply device, the charging method comprising:
performing communication connection with the mobile power supply device;
performing one or more of mutual identification, authentication, or authorization between the mobile power supply device and the electric mobility;
starting a charging process for receiving power from the mobile power supply device; and
terminating the charging process.

2. The charging method of claim 1, further comprising:
sharing a safe charging condition of the mobile power supply device and the electric mobility with the mobile power supply device before starting the charging process; and
monitoring a charging-related parameter of the mobile power supply device or the electric mobility during the charging process after starting the charging process.

3. The charging method of claim 1, further comprising:
identifying which use case the charging process belongs to among one or more use cases, in order to determine whether to impose a fee for the power supplied to the electric mobility through the charging process,
wherein the one or more use cases include useful free charging in an emergency situation, mobile charging service, or peer-to-peer trading of charging amounts.

4. The charging method of claim 1, wherein the performing of the communication connection with the mobile power supply device comprises:
searching for a candidate mobile power supply device capable of supplying power to the electric mobility, by the electric mobility; and
receiving a response to the search from the mobile power supply device.

5. The charging method of claim 4, wherein the searching for the candidate mobile power supply device comprises:
broadcasting a message requesting charging by the electric mobility.

6. The charging method of claim 5, wherein the message requesting charging includes a location of the electric mobility, an energy request, a charging start time, a target departure time, or a charging specification,
wherein the charging specification includes a maximum power limit, a maximum current limit, or a maximum voltage limit.

7. A communication and control device for charging of an electric mobility, mounted in the electric mobility and configured to perform communication and control related to charging, the communication and control device comprising:
a memory storing at least one instruction; and
a processor executing the at least one instruction,
wherein the processor, by the at least one instruction,
performs communication connection with a mobile power supply device,
performs one or more of mutual identification, authentication, or authorization between the mobile power supply device and the electric mobility,
starts a charging process for receiving power from the mobile power supply device, and
terminates the charging process.

8. The communication and control device of claim 7,
wherein the processor, by the at least one instruction, shares a safe charging condition of the mobile power supply device and the electric mobility with the mobile power supply device before starting the charging process, and
monitors a charging-related parameter of the mobile power supply device or the electric mobility during the charging process after starting the charging process.

9. The communication and control device of claim 7,
in the performing of the communication connection with the mobile power supply device,
wherein the processor searches for a candidate mobile power supply device capable of supplying power to the electric mobility, and
receives a response to the search from the mobile power supply device.

10. The communication and control device of claim 9,
in the electric mobility searching for the candidate mobile power supply device,
wherein the processor broadcasts a message requesting charging.

11. The communication and control device of claim 10,
wherein the message requesting charging includes a location of the electric mobility, an energy request, a charging start time, a target departure time, or a charging specification,
wherein the charging specification includes a maximum power limit, a maximum current limit, or a maximum voltage limit.

12. A communication and control device of a mobile power supply device, the communication and control device comprising:
a memory storing at least one instruction; and
a processor executing the at least one instruction,
wherein the processor, by the at least one instruction,
performs communication connection with an electric mobility that receives power,
performs one or more of mutual identification, authentication, or authorization between the mobile power supply device and the electric mobility,
starts a charging process for supplying power to the electric mobility, and
terminates the charging process.

13. The communication and control device of claim 12,
wherein the processor, by the at least one instruction, shares a safe charging condition of the mobile power supply device and the electric mobility with the electric mobility before starting the charging process, and
monitors a charging-related parameter of the mobile power supply device or the electric mobility during the charging process after starting the charging process.

14. The communication and control device of claim 12,
wherein the processor, by the at least one instruction, identifies which use case the charging process belongs to among one or more use cases, in order to determine whether to impose a fee for the power supplied to the electric mobility through the charging process,
wherein the one or more use cases include useful free charging in an emergency situation, mobile charging service, or peer-to-peer trading of charging amounts.

15. The communication and control device of claim 12,
in the performing of the communication connection with the electric mobility, wherein the processor,
receives a request message that is broadcast by the electric mobility to search for a candidate mobile power supply device capable of supplying power to the electric mobility, and
transmits a response message to the electric mobility based on the request message.

16. The communication and control device of claim 15,
wherein the response message includes acceptance of the request message, an expected arrival time, an expected service charge, an expected duration of charging, or a charging specification,
wherein the charging specification includes a maximum power limit, a maximum current limit, or a maximum voltage limit.

17. The communication and control device of claim 12,
wherein the processor, by the at least one instruction, guides or controls such that the mobile power supply device moves to a location of the electric mobility before starting the charging process.

18. The communication and control device of claim 12,
wherein the processor, by the at least one instruction, determines whether to supply power to the electric mobility based on status information of the mobile power supply device before starting the charging process,
wherein the status information includes a location, a travel direction, a distance limit, travel availability, an amount of energy available for supply/discharge, a current/residual state of charge (SoC), a mobility status, a maximum distance available for supply/discharge, an earliest time to depart for supply/discharge, a price, or a charging specification,
wherein the mobility status is one of discharging to another mobility, parked, charging, or traveling,
wherein the charging specification includes a maximum power limit, a maximum current limit, or a maximum voltage limit.

19. The communication and control device of claim 18,
in the determining whether to supply power to the electric mobility before starting the charging process, wherein the processor,
obtains at least part of the status information of the mobile power supply device through communication with at least one secondary actor server, and
determines whether to supply power to the electric mobility based on the communication with the at least one secondary actor server.

20. The communication and control device of claim 12,
wherein the processor, by the at least one instruction, transmits a report message to at least one secondary actor server based on the charging process ending,
wherein the report message includes a location of service, a request time, an arrival time, a finished time, or a distance traveled for the service.
